# EUROPEAN PATENT SPECIFICATION

(11) **EP 0 412 620 B1**
(45) Date of publication and mention of the grant of the patent: **12.03.1997**
(21) Application number: 90202155.9
(22) Date of filing: 07.08.1990
(51) Int. Cl.: C08G 67/02

(54) **Process for the preparation of polymers**
Verfahren zur Herstellung von Polymeren
Procédé de préparation de polymères

(30) Priority: 07.08.1989 NL 8902019
(43) Date of publication of application: 13.02.1991
(73) Proprietor: SHELL INTERNATIONALE RESEARCH MAATSCHAPPIJ B.V., 2596 HR Den Haag (NL)
(72) Inventor: Gautier, Pieter Antoine, NL-1031 CM Amsterdam (NL); Mastenbroek, Barend, NL-1031 CM Amsterdam (NL); Geuze, Maarten Marinus, NL-1031 CM Amsterdam (NL); Petrus, Leonardus, NL-1031 CM Amsterdam (NL)

(56) References cited:
- EP-A- 0 305 011
- Technische Chemie, E.FITZER W.FRITZ, Springer-Verlag 1975
- CHEMICAL REACTION ENGINEERING, OCTAVE LEVENSPIEL, WILEY INTERNATIONAL EDITION, 1962.

## Description

The invention relates to a process for the preparation of polymers of carbon monoxide with one or more olefinically unsaturated compounds.

The relevant polymers are linear polymers of carbon monoxide with one or more olefinically unsaturated compounds, in which polymers the units originating in carbon monoxide on the one hand and the units originating in the olefinically unsaturated compounds on the other hand, occur substantially in alternating order. These polymers can be prepared by contacting the monomers at an elevated temperature and pressure with a suitable catalyst, preferably in the presence of a diluent in which the polymers are insoluble or virtually insoluble. Such preparation may in principle be carried out in two ways, viz. batchwise or continuously.

The batch polymer preparation in the presence of said diluent is carried out by introducing the catalyst into a reactor which contains diluent and monomers and which is at the desired temperature and pressure. As polymerization proceeds, the pressure drops, the concentration of the polymers in the diluent increases and the viscosity of the suspension rises. Polymerization is continued until the viscosity of the suspension has reached such a high value that continuing the process would create difficulties, for instance, in connection with heat removal. In principle, the temperature is the only parameter that remains constant during batch polymer preparation. A variation of batch polymer preparation is semi-continuous preparation, in which not only the temperature but also the pressure is kept constant by supplying monomer to the reactor in the course of the polymerization.

In the continuous polymer preparation in the presence of said diluent, diluent, monomers and catalyst are continuously supplied to a reactor which contains monomers and a certain volume of the diluent and which is at the desired temperature and pressure while a polymer suspension is continuously discharged from the reactor. During the continuous polymer preparation, the temperature, the pressure and the liquid volume inside the reactor are kept substantially constant. After a start-up period, in which the polymer concentration in the suspension increases to the desired value, a stationary state sets in which is characterized in that the suspension discharged from the reactor has a substantially constant polymer content and in that the polymer present therein has substantially constant properties.

For the preparation of polymers on a technical scale, a continuous process is much to be preferred over a batch or a semi-continuous production system, the reasons being the following. In the first place, a continuous procedure allows a higher polymer production rate since the preparation is not constantly interrupted for charging and discharging the reactor, as is the case with batch production. Because in a continuous process, unlike in a batch process, all reaction parameters remain substantially constant, the former is easier to control and lends itself more readily to automation. Finally, a continuous process affords polymers that display less variation in properties and thus possess a more constant quality than those obtained in a batch procedure.

In the above-mentioned polymer preparation, the utilization of the catalyst plays an important role, in particular if the latter includes an expensive noble metal, such as a Group VIII metal, for example palladium. The utilisation of the catalyst is more efficient according as less catalyst is supplied to the reactor, at a certain mass of suspension in the reactor and at a certain polymer production, or according as more polymer is produced, at a certain mass of suspension in the reactor and a certain supply of catalyst.

As a rule, a catalyst is more efficiently utilized at certain reaction conditions (temperature, pressure) according as the product of the polymer yield and the production rate per mass unit of suspension is larger. The polymer yield is defined as the polymer production rate (kg/h) divided by the supply rate of the Group VIII metal (g group VIII metal/h). The production rate per mass unit of suspension is expressed in kg polymer/(kg suspension.h). The (multiplication) product of the polymer yield and the production rate per mass unit of suspension is hereinafter indicated by the term "catalyst utilisation".

It will be appreciated that for the preparation of the present polymers, special interest is in the first place focused on a continuous process and further on such a process in which a high degree of catalyst utilization is achieved. An investigation into this matter has now surprisingly revealed that a considerable increase in the utilization of the catalyst is achieved during the continuous preparation of the present polymers by carrying out the preparation not in a single reactor but in two or more reactors connected in series.

The present patent application therefore relates to a process for the preparation of polymers characterized in that linear polymers of carbon monoxide and one or more olefinically unsaturated compounds, in which polymers the units originating in carbon monoxide on the one hand and the units originating in the olefinically unsaturated compounds on the other hand occur substantially in alternating order, are prepared in a continuous manner by contacting the monomers with a suitable catalyst at a temperature of 25-150°C and pressure of 2-150 bar in two or more reactors connected in series in such a way that only a part of the carbon monoxide, only a part of the olefinically unsaturated compounds and at least a part of the catalyst are supplied to the first reactor.

In the process of the invention, the monomers are preferably contacted with the catalyst in the presence of a diluent in which the polymers are insoluble or virtually insoluble. The process may be carried out such that only a part of the diluent is supplied to the first reactor. Very suitable for the purpose are lower aliphatic alcohols and in particular methanol. Whenever mention is made hereinafter of "diluents", the term is used to designate diluents in which the polymers are insoluble or virtually insoluble. The process of the invention is preferably carried out in two or three reactors.

If the polymerization of the invention in the presence of a diluent is carried out in two reactors, two possibilities are distinguishable, depending on whether or not the suspension concentration (expressed as kg polymer/kg suspension x 100%) in the first reactor is more than 50% of that in the second reactor.

If the polymerization of the invention in the presence of a diluent is carried out in two reactors, with the suspension concentration in the first reactor being more than 50% of that in the second reactor, the mass of suspension present in the first reactor is preferably 10-200% of that of the suspension present in the second reactor. More preference is given to an embodiment in which the suspension concentration in the first reactor is more than 75% of that in the second reactor, combined with a mass of suspension present in the first reactor which is 25-150% of that of the suspension present in the second reactor, and in particular an embodiment in which the suspension concentrations are substantially the same in the two reactors, combined with a mass of suspension present in the first reactor which is about half that of the suspension present in the second reactor.

If the polymerization of the invention in the presence of a diluent is carried out in two reactors, with the suspension concentration in the first reactor being at most 50% of that in the second reactor, the mass of suspension present in the first reactor is preferably 1-25% of that in the second reactor. More preference is given to an embodiment in which the suspension concentration in the first reactor is less than 40% of that in the second reactor, combined with a mass of suspension present in the first reactor which is 2-15% of that in the second reactor, and in particular an embodiment in which the suspension concentration in the first reactor is less than 30% of that in the second reactor, combined with a mass of suspension present in the first reactor which is 2.5-12.5% of that present in the second reactor.

If the polymerization of the invention in the presence of a diluent is carried out in three reactors, preference is given to an embodiment in which the suspension concentration in the first reactor is at most 50% of that in the second reactor and in which the suspension concentration in the second reactor is more than 50% of that in the third reactor, combined with a mass of suspension present in the first reactor which is 1-25% of that in the second reactor and a mass of suspension in the second reactor which is 10-200% of that in the third reactor. More preference is given to an embodiment in which the suspension concentration in the first reactor is less than 40% of that in the second reactor and in which the suspension concentration in the second reactor is more than 75% of that in the third reactor, combined with a mass of suspension in the first reactor which is 2-15% of that in the second reactor and a mass of suspension in the second reactor which is 25-150% of that in the third reactor. Special preference is given to an embodiment in which the suspension concentration in the first reactor is less than 30% of the suspension concentration in the second reactor and in which the suspension concentrations in the second and third reactors are substantially the same, combined with a mass of suspension in the first reactor which is 2.5-12.5% of that in the second reactor and a mass of suspension in the second reactor which is about half the mass of suspension in the third reactor.

In the process of the invention, a catalyst is used which is capable of catalysing the formation of the linear alternating polymers mentioned hereinbefore, starting from a mixture of carbon monoxide and one or more olefinically unsaturated compounds. Catalysts that are suitable for the present purpose are, inter alia, those including a Group VIII metal. In the present patent application, Group VIII metals are understood to be the noble metals ruthenium, rhodium, palladium, osmium, iridium and platinum, as well as the iron group metals iron, cobalt and nickel. Preference is given to catalysts which include palladium, nickel or cobalt as Group VIII metal. Special preference is given to palladium as the Group VIII metal. If the catalysts that are used in the process of the invention comprise a Group VIII metal, they are preferably incorporated in the catalyst in the form of a salt of a carboxylic acid, in particular in the form of an acetate. In addition to a Group VIII metal, the catalysts preferably comprise a bidentate ligand having two phosphorus, nitrogen or sulphur containing dentate groups via which the bidentate ligand can form a complex with the Group VIII metal. When a nitrogen bidentate ligand is used, preference is given to compounds of the general formula 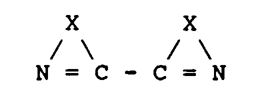 wherein X represents an organic bridging group containing three or four atoms in the bridge at least two of which are carbon atoms, such as 2,2'-bipyridine and 1,10-phenanthroline. When use is made of a sulphur bidentate ligand, it is preferred to use a compound of the general formula R¹S-R-SR¹, wherein R¹ is an optionally polarly substituted hydrocarbyl group and R is a bivalent organic bridging group which has at least two carbon atoms in the bridge, such as 1,2-bis(ethylthio)ethane and cis-1,2-bis(benzylthio)ethene. Preference is given to the use of phosphorus bidentate ligands of the general formula (R¹)₂P-R-P(R¹)₂, wherein R and R¹ have the meanings given hereinbefore. Further, it is preferred to use such phosphorus bidentate ligands in which R¹ represents an aromatic hydrocarbyl group having at least one alkoxy substituent in a position ortho in respect to the phosphorus atom to which it is bound. A compound which is very suitable for the present purpose is 1,3-bis[bis(2-methoxyphenyl)phosphino]propane.

If a nitrogen or sulphur bidentate ligand is used in the catalysts, the applied quantity is preferably 0.5-100 and in particular 1-50 mol per mol of Group VIII metal. When a phosphorus bidentate ligand is used, the applied quantity is preferably 0.5-2 and in particular 0.75-1.5 mol per mol of Group VIII metal. In addition to a Group VIII metal and a phosphorus, nitrogen or sulphur bidentate ligand, the catalysts preferably include an anion of an acid with a pKa of less than 6, more preferably an anion of an acid with a pKa of less than 4, and in particular an anion of an acid with a pKa of less than 2. Examples of suitable acids with a pKa of less than 2 are sulphonic acids, such as para-toluenesulphonic acid, and halocarboxylic acids, such as trifluoroacetic acid. The anion of an acid with a pKa of less than 6 can be incorporated in the catalysts in the form of an acid and/or in the form of a salt, such as a copper or a nickel salt. The anion is preferably present in the catalysts in a quantity of 1-100 and in particular 2-50 mol per mol of Group VIII metal. The anion of an acid with a pKa of less than 6 may be used as an individual component, but it may also be present in the catalysts because as the Group VIII metal compound, for example, palladium trifluoroacetate or palladium para-tosylate, had been used. In order to enhance the activity of the Group VIII metal-containing catalysts, a 1,4-quinone may be included therein. Very suitable for this purpose are 1,4-benzoquinone and 1,4-naphthoquinone. The applied quantity of 1,4-quinone is preferably 5-5000 and in particular 10-1000 mol per mol of Group VIII metal.

In the process of the invention, the catalyst may be supplied either exclusively to the first reactor or it may be divided among various reactors, in which case it is preferred, however, to supply more than 50% of the catalyst to the first reactor. Particularly, more than 75%, and more particularly, substantially all of the catalyst is supplied to the first reactor. If the process of the invention is carried out in more than two reactors, and only part of the catalyst is supplied to the first reactor, the remainder of the catalyst is preferably supplied exclusively to the second reactor.

Olefinically unsaturated compounds that can be suitably polymerized with carbon monoxide by using the process of the invention are compounds consisting exclusively of carbon and hydrogen as well as compounds which, in addition to carbon and hydrogen, contain one or more hetero-atoms. The process of the invention is preferably applied for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process of the invention is in particular very suitable for application in the preparation of copolymers of carbon monoxide with ethene and for the preparation of terpolymers of carbon monoxide with ethene and an alpha-olefin, in particular propene.

The quantity of catalyst composition employed in the process of the invention may vary within wide limits. When a Group VIII metal-containing catalyst is employed, it is preferred to use such a quantity of catalyst composition as to comprise 10⁻⁷-10⁻³ and in particular 10⁻⁶-10⁻⁴ mol of Group VIII metal per mol of olefinically unsaturated compound to be polymerized.

The process of the invention is carried out at a temperature of 25-150°C and a pressure of 2-150 bar and in particular at a temperature of 30-130°C and a pressure of 5-100 bar. The molar ratio of olefinically unsaturated compounds relative to carbon monoxide is preferably 10:1-1:10 and in particular 5:1-1:5.

The invention will now be illustrated with the aid of four examples, in which carbon monoxide/ethene/propene terpolymers were prepared in a continuous manner. Example 1 involves the preparation in a single reactor. Examples 2 and 3 relate to the preparation in two reactors connected in series. Example 4 refers to the preparation carried out in three reactors connected in series. In Examples 2-4, the reaction product of the first reactor was continuously fed to the second reactor, together with fresh feed components and, optionally, fresh diluent. Moreover, in Example 4 the reaction product of the second reactor was continuously fed to the third reactor, together with fresh feed components and fresh diluent. During the polymer preparation, the following two catalyst solutions were employed. Catalyst solution I comprised per 1 of acetone, 1096 mg of palladium acetate, 2736 mg of 1,3-bis[bis(2-methoxyphenyl)phosphino]propane and 5600 mg of trifluoroacetic acid. Catalyst solution II comprised per 1 of acetone, 1000 mg of palladium acetate, 2491 mg of 1,3-bis[bis(2-methoxyphenyl)phosphino]propane and 5335 mg of trifluoroacetic acid.

In all the examples, the temperature was 80°C and the pressure was 45 bar in each one of the reactors. The pressure inside the reactors was maintained by discharging excess feed gasses from the last reactor. In Examples 2-4, the gas phase compositions inside the reactors, which were connected in series, were virtually the same.

The reaction conditions prevailing in the various reactors as well as the results obtained in the various examples are given in Table I.

Of Examples 1-4, Examples 2-4 are in accordance with the invention. In these examples, the polymers were prepared in a continuous process in two or three reactors connected in series. Example 1, in which the polymer preparation was carried out in a single reactor, falls outside the scope of the invention and has been included for comparison. The favourable effect of carrying out the continuous polymer preparation in two or more reactors connected in series instead of in one reactor with respect to catalyst utilization becomes clear upon comparison of the result of Example 1 (palladium utilization 0.44 kg²/(g.kg.h)) with the results of Examples 2-4 (palladium utilization 0.76, 1.14 and 1.69 kg²/(g.kg.h), respectively). Moreover, carrying out the process of the invention as described in Examples 3 and 4 results in a considerable increase in reaction rates (from 4.9 to 7.5 kg of polymer/g of palladium.h⁻¹).

With the aid of ¹³C-NMR analysis, it was established that the carbon monoxide/ethene/propene terpolymers prepared by Examples 1-4 were made up of linear chains in which the units originating in carbon monoxide on the one hand and units originating in ethene and propene on the other hand, occur in alternating order. The units originating in ethene and propene occurred randomly distributed within the polymer chains.

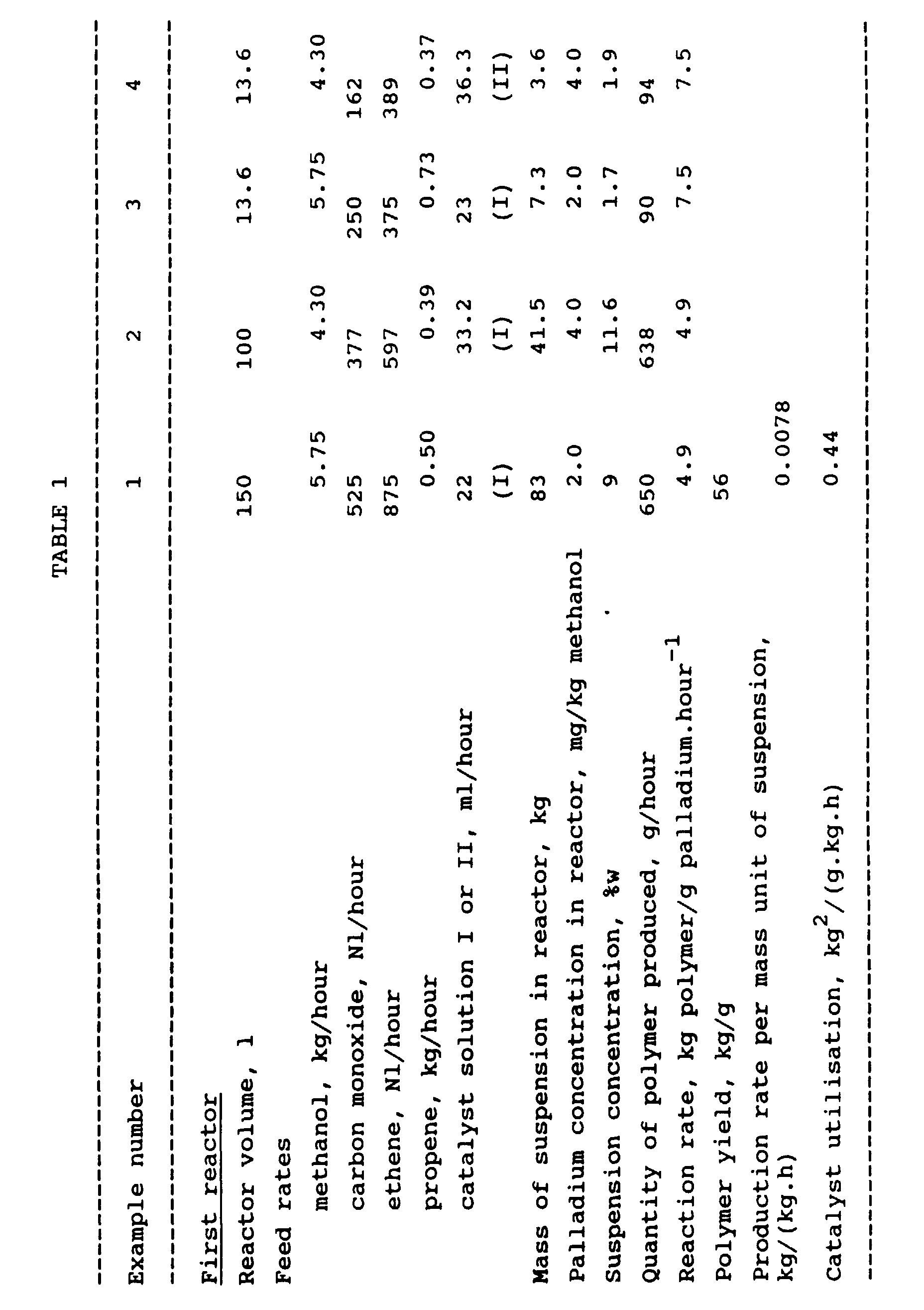

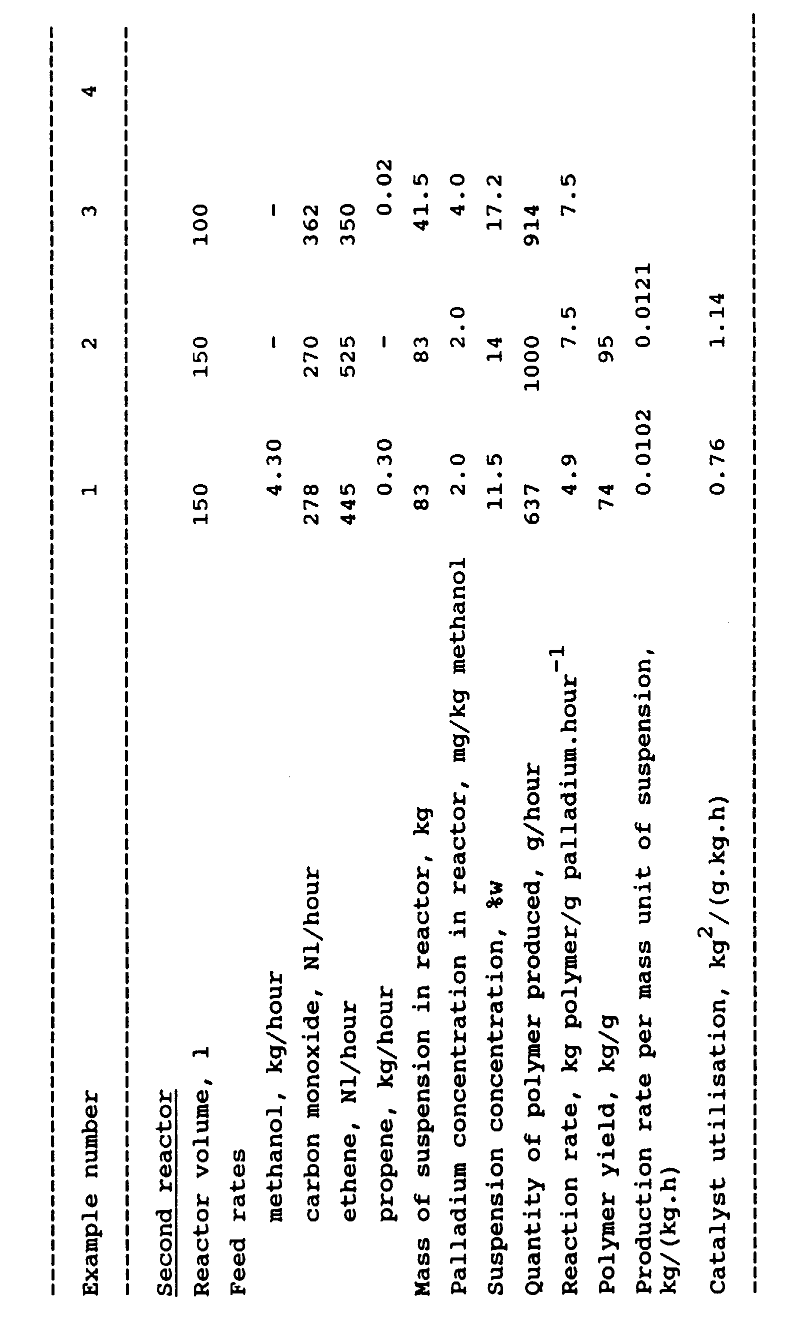

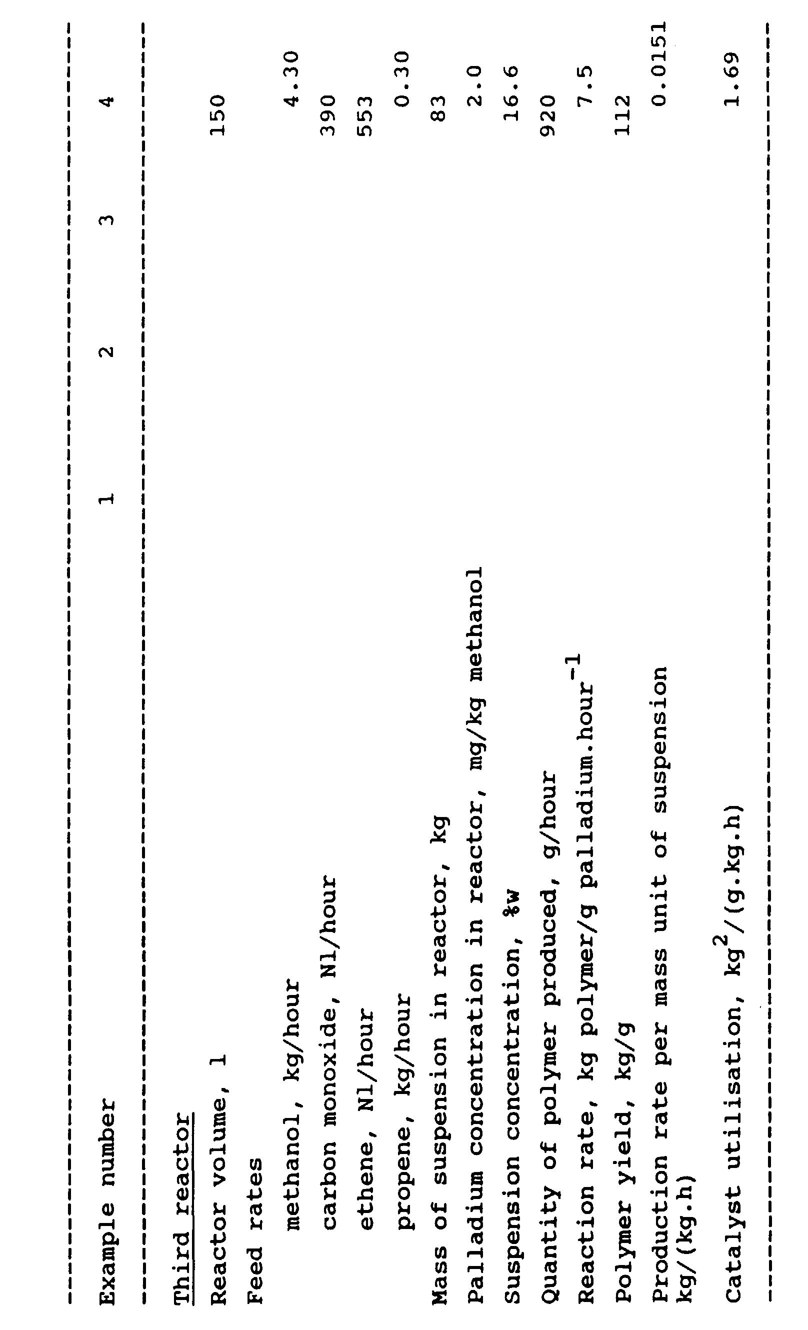

## Claims

1. Process for the preparation of polymers, characterized in that linear polymers of carbon monoxide with one or more olefinically unsaturated compounds, in which polymers the units originating in carbon monoxide on the one hand and the units originating in the olefinically unsaturated compounds on the other hand occur substantially in alternating order, are prepared in a continuous manner by contacting the monomers with a suitable catalyst at a temperature of 25-150 °C and a pressure of 2-150 bar in two or more reactors connected in series in such a way that only a part of the carbon monoxide, only a part of the olefinically unsaturated compounds and at least a part of the catalyst are supplied to the first reactor.

2. A process as claimed in claim 1, characterized in that the polymerization is carried out in the presence of a diluent in which the polymers are insoluble or virtually insoluble.

3. A process as claimed in claim 2, characterized in that only a part of the diluent is supplied to the first reactor.

4. A process as claimed in claim 2 or 3, characterized in that the polymerization is carried out in two reactors, in that the suspension concentration inside the first reactor is more than 50% of that in the second reactor and in that the mass of suspension in the first reactor is 10-200% of the mass of suspension in the second reactor.

5. A process as claimed in claim 2 or 3, characterized in that the polymerization is carried out in two reactors, in that the suspension concentration inside the first reactor is at most 50% of that in the second reactor and in that the mass of suspension inside the first reactor is 1-25% of the mass of suspension in the second reactor.

6. A process as claimed in claim 2 or 3, characterized in that the polymerization is carried out in three reactors, in that the suspension concentration inside the first reactor is at most 50% of that in the second reactor, in that the suspension concentration in the second reactor is more than 50% of that in the third reactor, in that the mass of suspension inside the first reactor is 1-25% of the mass of suspension in the second reactor and in that the mass of suspension in the second reactor is 10-200% of the mass of suspension in the third reactor.

7. A process as claimed in one or more of claims 1-6, characterized in that the catalyst comprises a Group VIII metal.

8. A process as claimed in claim 7, characterized in that the catalyst comprises palladium as the Group VIII metal.

9. A process as claimed in claim 7 or 8, characterized in that, in addition to a Group VIII metal, the catalyst comprises
a) a bidentate ligand having two phosphorus-, nitrogen- or sulphur containing dentate groups via which the bidentate ligand can form a complex with the Group VIII metal,
b) an anion of an acid with a pKa of less than 6, and
c) optionally, a 1,4-quinone.

10. A process as claimed in claim 9, characterized in that the catalyst comprises an anion of an acid with a pKa of less than 4.

11. A process as claimed in one or more of claims 1-10, characterized in that more than 50% of the catalyst is supplied to the first reactor.

12. A process as claimed in one or more of claims 1-11, characterized in that hydrocarbons, such as ethene or a mixture of ethene with another olefinically unsaturated hydrocarbon, such as propene, are used as the olefinically unsaturated compounds.

13. A process as claimed in one or more of claims 1-12, characterized in that it is carried out at a temperature of 30-130 °C, a pressure of 5-100 bar and a molar ratio of the olefinically unsaturated compounds relative to carbon monoxide, of 10:1-1:10.

## Patentansprüche

1. Verfahren zur Herstellung von Polymeren, dadurch gekennzeichnet, daß lineare Polymere aus Kohlenmonoxid und einer oder mehrerer olefinisch ungesättigten Verbindungen, in welchen Polymeren die einerseits von Kohlenmonoxid abstammenden Einheiten und anderseits die von den olefinisch ungesättigten Verbindungen abstammenden Einheiten im wesentlichen in alternierender Anordnung vorliegen, in kontinuierlicher Weise durch In-Kontakt-Bringen der Monomeren mit einem geeigneten Katalysator bei einer Temperatur von 25 bis 150°C und einem Druck von 2 bis 150 bar in zwei oder mehreren, in Reihe verbundenen Reaktoren derart hergestellt werden, daß nur ein Teil des Kohlenmonoxids, nur ein Teil der olefinisch ungesättigten Verbindungen und wenigstens ein Teil des Katalysators dem ersten Reaktor zugeführt werden.

2. Verfahren nach Anspruch 1, dadurch gekennzeichnet, daß die Polymerisation in Anwesenheit eines Verdünnungsmittels ausgeführt wird, worin die Polymeren unlöslich oder praktisch unlöslich sind.

3. Verfahren nach Anspruch 2, dadurch gekennzeichnet, daß nur ein Teil des Verdünnungsmittels dem ersten Reaktor zugeführt wird.

4. Verfahren nach Anspruch 2 oder 3, dadurch gekennzeichnet, daß die Polymerisation in zwei Reaktoren ausgeführt wird, daß die Suspensionskonzentration im ersten Reaktor mehr als 50% der Suspensionskonzentration im zweiten Reaktor beträgt und daß die Suspensionsmasse im ersten Reaktor 10 bis 200% der Suspensionsmasse im zweiten Reaktor ausmacht.

5. Verfahren nach Anspruch 2 oder 3, dadurch gekennzeichnet, daß die Polymerisation in zwei Reaktoren ausgeführt wird, daß die Suspensionskonzentration im ersten Reaktor höchstens 50% der Suspensionskonzentration im zweiten Reaktor beträgt und daß die Suspensionsmasse im ersten Reaktor 1 bis 25% der Suspensionsmasse im zweiten Reaktor ausmacht.

6. Verfahren nach Anspruch 2 oder 3, dadurch gekennzeichnet, daß die Polymerisation in drei Reaktoren ausgeführt wird, daß die Suspensionskonzentration im ersten Reaktor höchstens 50% der Suspensionskonzentration im zweiten Reaktor beträgt, daß die Suspensionskonzentration im zweiten Reaktor mehr als 50% der Suspensionskonzentration im dritten Reaktor beträgt und daß die Suspensionsmasse im ersten Reaktor 1 bis 25% der Suspensionsmasse im zweiten Reaktor ausmacht und daß die Suspensionsmasse im zweiten Reaktor 10 bis 200% der Suspensionsmasse im dritten Reaktor ausmacht.

7. Verfahren nach einem oder mehreren der Ansprüche 1 bis 6, dadurch gekennzeichnet, daß der Katalysator ein Gruppe VIII-Metall umfaßt.

8. Verfahren nach Anspruch 7, dadurch gekennzeichnet, daß der Katalysator Palladium als Gruppe VIII-Metall umfaßt.

9. Verfahren nach Anspruch 7 oder 8, dadurch gekennzeichnet, daß zusätzlich zu einem Gruppe VIII-Metall der Katalysator
a) einen Bidentatliganden mit zwei Phosphor-, Stickstoff- oder Schwefel-hältigen Dentatgruppen, über welche der Bidentatligand einen Komplex mit dem Gruppe VIII-Metall bilden kann;
b) ein Anion einer Säure mit einem pKa-Wert von kleiner als 6; und
c) gegebenenfalls ein 1,4-Chinon umfaßt.

10. Verfahren nach Anspruch 9, dadurch gekennzeichnet, daß der Katalysator ein Anion einer Säure mit einem pKa-Wert von kleiner als 4 umfaßt.

11. Verfahren nach einem oder mehreren der Ansprüche 1 bis 10, dadurch gekennzeichnet, daß mehr als 50% des Katalysators dem ersten Reaktor zugeführt werden.

12. Verfahren nach einem oder mehreren der Ansprüche 1 bis 11, dadurch gekennzeichnet, daß Kohlenwasserstoffe wie Ethen oder ein Gemisch aus Ethen mit einem anderen olefinisch ungesättigten Kohlenwasserstoff wie Propen als olefinisch ungesättigte Verbindungen verwendet werden.

13. Verfahren nach einem oder mehreren der Ansprüche 1 bis 12, dadurch gekennzeichnet, daß es bei einer Temperatur von 30 bis 130°C, einem Druck von 5 bis 100 bar und einer Molverhältnis der olefinisch ungesättigten Verbindungen zu Kohlenmonoxid von 10:1 bis 1:10 ausgeführt wird.

## Revendications

1. Procédé de préparation de polymères, caractérisé en ce que l'on prépare des polymères linéaires du monoxyde de carbone et d'un ou plusieurs composés à insaturation oléfinique, polymères dans lesquels les unités tirant leur origine du monoxyde de carbone, d'une part et les unités tirant leur origine des composés à insaturation oléfinique, d'autre part, sont présents en un ordre sensiblement alternant, d'une manière continue par la mise en contact des monomères avec un catalyseur approprié, à une température de 25 à 150°C et sous une pression de 2 à 150 bars dans deux ou plus de deux réacteurs raccordés en série, en une manière telle que seule une partie du monoxyde de carbone, seule une partie des composés à insaturation oléfinique et au moins une partie du catalyseur soient introduites dans le premier réacteur.

2. Procédé suivant la revendication 1, caractérisé en ce que l'on entreprend la polymérisation en présence d'un diluant dans lequel les polymères sont insolubles ou pratiquement insolubles.

3. Procédé suivant la revendication 2, caractérisé en ce que seule une partie du diluant est fournie au premier réacteur.

4. Procédé suivant la revendication 2 ou 3, caractérisé en ce que l'on entreprend la polymérisation dans deux réacteurs, en ce que la concentration de la suspension à l'intérieur du premier réacteur est supérieure à 50% de celle dans le second réacteur et en ce que la masse de la suspension dans le premier réacteur représente 10 à 200% de la masse de suspension dans le second réacteur.

5. Procédé suivant la revendication 2 ou 3, caractérisé en ce que l'on entreprend la réaction dans deux réacteurs, en ce que la concentration de la suspension à l'intérieur du premier réacteur atteint au plus 50% de celle dans le second réacteur et en ce que la masse de suspension à l'intérieur du premier réacteur représente de 1 à 25% de la masse de suspension dans le second réacteur.

6. Procédé suivant la revendication 2 ou 3, caractérisé en ce que l'on entreprend la polymérisation dans trois réacteurs, en ce que la concentration de la suspension dans le premier réacteur atteint au plus 50% de celle dans le second réacteur, en ce que la concentration de la suspension dans le second réacteur est supérieure à 50% de celle dans le troisième réacteur, en ce que la masse de la suspension à l'intérieur du premier réacteur représente de 1 à 25% de la masse de suspension dans le second réacteur et en ce que la masse de suspension dans le second réacteur représente de 10 à 200% de la masse de suspension dans le troisième réacteur.

7. Procédé suivant une ou plusieurs des revendications 1 à 6, caractérisé en ce que le catalyseur comprend un métal du groupe VIII.

8. Procédé suivant la revendication 7, caractérisé en ce que le catalyseur comprend du palladium, à titre de métal du groupe VIII.

9. Procédé suivant la revendication 7 ou 8, caractérisé en ce que, en plus d'un métal du groupe VIII, le catalyseur comprend
a) un ligand bidentate comportant des radicaux dentate contenant du phosphore, de l'azote ou du soufre, par l'intermédiaire desquels le ligand bidentate peut former un complexe avec le métal du groupe VIII,
b) un anion d'un acide qui possède un pKa inférieur à 6 et
c) éventuellement une 1,4-quinone.

10. Procédé suivant la revendication 9, caractérisé en ce que le catalyseur comprend un anion d'un acide qui possède un pKa inférieur à 4.

11. Procédé suivant une ou plusieurs des revendications 1 à 10, caractérisé en ce que plus de 50% du catalyseur sont fournis au premier réacteur.

12. Procédé suivant une ou plusieurs des revendications 1 à 11, caractérisé en ce que des hydrocarbures, comme l'éthène, ou mélange d'éthène et d'un autre hydrocarbure à insaturation oléfinique, comme le propène, sont utilisés, à titre de composés à insaturation oléfinique.

13. Procédé suivant une ou plusieurs des revendications 1 à 12, caractérisé en ce qu'on l'entreprend à une température de 30 à 130°C, sous une pression de 5 à 100 bars et avec un rapport molaire des composés à insaturation oléfinique au monoxyde de carbone de 10:1 à 1:10.
